# EUROPEAN PATENT SPECIFICATION

(11) **EP 2 646 720 B1**
(45) Date of publication and mention of the grant of the patent: **16.10.2019**
(21) Application number: 11845557.5
(22) Date of filing: 28.11.2011
(51) Int. Cl.: F16K 31/383, F16K 11/044, B25D 9/18

(54) **QUICK RELEASE VALVE**
SCHNELLÖFFNUNGSVENTIL
SOUPAPE À OUVERTURE RAPIDE

(30) Priority: 01.12.2010 FI 20106265
(43) Date of publication of application: 09.10.2013
(73) Proprietor: Global Boiler Works OY, 90400 Oulu (FI)
(72) Inventor: JOKINEN, Marko, FI-90400 Oulu (FI); SELKÄLÄ, Timo, FI-90840 Haukipudas (FI)
(74) Representative: Berggren Oy, Helsinki & Oulu
(86) International application number: PCT/FI2011/051049
(87) International publication number: WO 2012/072875

(56) References cited:
- DE-A1- 10 357 401
- GB-A- 1 090 169
- GB-A- 2 224 334
- US-A- 3 285 267
- US-A- 4 579 138
- US-A- 5 220 860
- US-A1- 2003 132 241

## Description

The invention relates to a quick release valve, which has a chamber, an inlet opening leading into the chamber, a connection opening for connecting to a space to be pressurised, at least one outlet opening and a piston, which is moveable under the influence of air pressure between a first position closing the outlet opening and a second position opening the outlet opening.

Many pneumatic devices have a space to be pressurised, for example a pressure cylinder, which it must be possible to pressurise and discharge quickly during use of the device. Such devices are among others air blowers and percussion hammers functioning in pulses. Air is led into the pressure cylinders of the devices and removed from the cylinder through a quick release valve.

Publication US 2003/0132241 describes a quick release valve, which has a moving piston arranged inside a cylindrical chamber. In the upper part of the chamber there is an inlet opening for the inflow of inlet air and in the wall of the lower part of the chamber there is a connection opening for leading air from the chamber into a pressure vessel. In the side walls of the chamber there are a number of outlet openings, through which air can flow out of the chamber. The position of the piston is controlled with the aid of the pressure of the inlet air. In a filling situation the pressure of the inlet air pushes the piston into the first position against the bottom of the chamber, whereby the side walls of the piston close the outlet openings exiting from the chamber. Air thus flows through a bypass duct passing through the piston from the chamber into the pressure vessel. In a discharging situation the pressure in the pressure chamber raises the piston upward into the second position against the lid of the chamber, whereby the cylinder moves away from in front of the outlet openings and the air can exit from the pressure vessel through the connection opening and the outlet openings.

In this solution the outlet openings are situated in the sides of the chamber, wherefore there must be a sealing preventing bypass flow in the edges of the piston. The bypass ducts pass through the piston and they have a closing arrangement implemented with a spherical part. The quick release valve thus has a complicated structure.

Publication WO 2007/020387 describes a quick release valve, which has an inlet opening, a connection opening and an outlet opening. Between the inlet opening and outlet opening there is a plate, which can move under the influence of air pressure between a first position closing the outlet opening and a second position closing the inlet opening. The plate is moved into the second position by cutting off the air supply from the inlet opening, whereby air starts to flow into the valve from the connection duct. In the solution according to the publication the mouth of the connection duct opens in a ring-like manner onto the edges of the plate, whereby the air flow discharged from the connection opening can affect both sides of the plate, which significantly slows down the opening of the outlet opening.

Publication GB 1090169 presents a quick release valve, which has a flexible plate inside the chamber, which moves under the influence of air pressure. The first wall of the chamber has an inlet opening for the inflow of air and the second wall of the chamber has an outlet opening for the outflow of air. The second wall further has a recess surrounding the outlet opening, as a continuation of which recess there is a connection opening. The plate inside the chamber can move into a discharge position against the first wall or into a supply position against the second wall. In the supply position the plate closes the outlet opening and air can flow from the chamber into the connection opening by passing around the edges of the plate. In the discharge position the air can exit from the connection opening to the discharge opening and out of the valve. The back-and-forth movement of the plate is controlled with a shaft peg in the middle of the plate, which is fitted to move in a sleeve in the inlet opening.

DE 103 57 401 A1 discloses a quick release valve according to the preamble of claim 1. Other quick release valve solutions are presented in publications US 3285267, US 4703869 and US 4767024.

It is an object of the invention to provide an improved quick release valve, by which the drawbacks and disadvantages relating to the prior art can be reduced.

The objects of the invention are obtained with a quick release valve according to the independent claim. Some advantageous embodiments of the invention are presented in the dependent claims.

The quick release valve according to the invention has a chamber, an inlet opening leading into the chamber for leading in pressurised gas and a connection opening for connecting to a space to be pressurised. The valve further has at least one outlet opening, through which the gas can quickly exit from the pressurised space in connection with the connection opening, and a piston, which is moveable under the influence of air pressure between a first position closing the outlet opening and a second position opening the outlet opening. The basic idea of the invention is that the chamber has a first surface, onto which the mouths of the connection opening and the outlet openings open, and the piston has a closing surface, which in said first position is arranged to settle against said first surface. The closing surface of the piston settled against the first surface thus simultaneously closes the mouths of both the connection opening and the outlet openings. Said first surface and said closing surface are advantageously substantially even surfaces. An substantially even surface here means that the surfaces do not have significant bulges or recesses or convex or concave parts. On the edges of said first surface there may be a peripheral surface, which is at a different level than the middle part of the first surface.

According to the invention the piston is a part placed in the chamber, which part is freely moving under the influence of air pressure. The piston is advantageously an substantially rigid plate-like part. The material of the piston can be for example polyacetate. The closing surface of the piston may have a flexible coating.

In a second advantageous embodiment of the quick release valve according to the invention the piston is a layered structure, which has an upper plate, a lower plate and an attenuation layer between the upper plate and lower plate.

A third advantageous embodiment of the quick release valve according to the invention has a lid, which has a cylindrical side wall, and a bottom, which is attached to the edge of the side wall. The lid and the bottom form a cylindrical chamber. The lid and the bottom are separate structural parts, which are attached together with some suitable attaching method, for example with compatible threads in the edge surface of the lid and the edge of the side wall. The lid and bottom are advantageously of metal, such as aluminium.

A fourth advantageous embodiment of the quick release valve according to the invention has a bypass route for leading pressurised gas into the connection opening past a piston in the first position. Said bypass route advantageously comprises a bypass groove in the side wall of the lid, a groove in the edge of the bottom and at least one bypass duct leading from the groove to the connection opening. The bypass route may also comprise a supply hole leading through the piston.

In a fourth advantageous embodiment of the quick release valve according to the invention the surface area A₁ of the piston is substantially larger than the cross-sectional surface area A₂ of the connection opening. The larger surface area of the piston ensures that the piston stays in its place in the first position, which closes the outlet opening, when supplying pressurised gas.

It is an advantage of the invention that it is structurally simple, small and functionally reliable.

It is further an advantage of the invention that it is suited for use in pneumatic devices, which require very large flow capacities for release air, such as in percussion hammers.

It is still an advantage of the invention that its operating mechanism is not substantially disturbed due to thermal expansion of the parts. The quick release valve thus retains its operating capability also in use circumstances that are dirty, dusty, hot and have varying temperatures.

In the following, the invention will be described in detail. In the description, reference is made to the appended drawings, in which
Figure 1a shows as an example a quick release valve according to the invention as a vertical cross-sectional view, when the piston of the quick release valve is in the first position,
Figure 1b shows the quick release valve of Figure 1a as a horizontal cross-sectional view,
Figure 2a shows as a cross-sectional view the quick release valve of Figure 1a and 1b, when the piston of the quick release valve is in the second position,
Figure 2b shows the quick release valve of Figure 2a as a horizontal cross-sectional view,
Figure 3a shows as an example an advantageous embodiment of the quick release valve according to the invention as a cross-sectional view,
Figure 3b shows as an example a second advantageous embodiment of the quick release valve according to the invention as a cross-sectional view and
Figures 4a-4c show as an example a third advantageous embodiment of the quick release valve according to the invention as cross-sectional views.

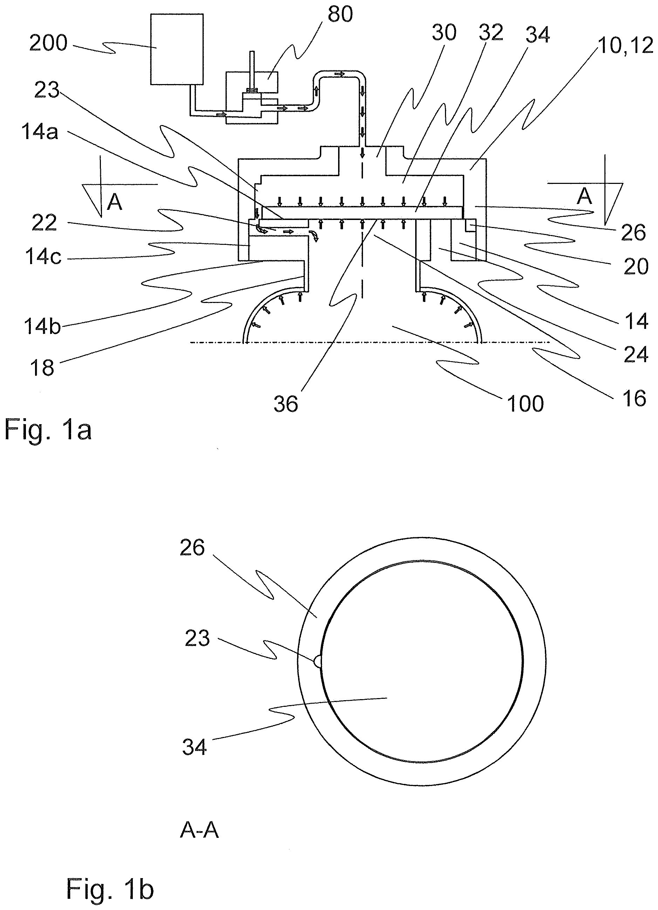

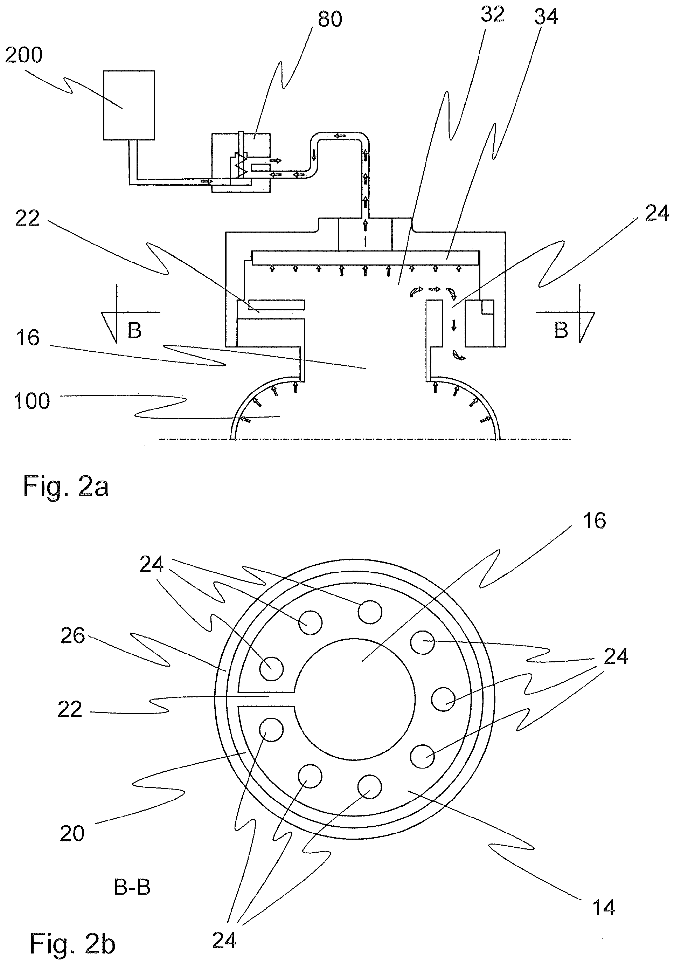

Figure 1a shows as an example a quick release valve according to the invention as a vertical cross-sectional view and Figure 1b shows the same quick release valve as a horizontal cross-sectional view cut along sectional plane A-A. The quick release valve has a frame 10, which is constructed of a lid 12 and a bottom 14 attached to the lid. The bottom is shaped as a circular plate-like part, which has a first surface 14a, a second surface 14b and an edge surface 14c. On the outer edge of the first surface of the bottom there is a circulating groove 20, the cross-section of which has a rectangular shape. In the middle of the bottom there is a circular connection opening 16, the cross-sectional area of which is A₂. On the second surface of the bottom there is a cylindrical collar 18 circulating the edges of the connection opening. The quick release valve is connected with the aid of the collar to a space 100 to be pressurised, which may for example be the pressure cylinder of a striking tool. Inside the bottom there is a bypass duct 22 in the direction of the first and second surface, the first end of which duct opens up into the groove 20 and the second end into the connection opening 16. The bottom further has a number of penetrating outlet openings 24, the first ends of which open up onto the first surface of the bottom and the second ends onto the second surface of the bottom. In the device shown in Figure 1a there are nine outlet openings (Figure 2b), but there may also be some other number of them. The outlet openings are placed in a ring-like manner around the connection opening. Through the outlet openings a flow connection opens up from inside the quick release valve to its outside.

The lid 12 is a uniform shaped metal part, which has a circular plate-like part and a cylindrical side wall 26 circulating the plate-like part. In the middle of the lid there is a penetrating inlet opening 30. The bottom 14 is attached by its edges to the free edge of the side wall, so that a cylindrical chamber 32 is formed inside the frame. For attaching the bottom there are compatible threads (threads are not shown in the figure) in the edge surface 14c of the bottom and the inner surface of the side wall, which threads make it possible to attach the bottom into place by screwing. Inside the chamber there is a plate-like circular piston 34, the diameter of which is slightly smaller than the inner diameter of the chamber 32. There is thus a gap between the outer edge of the piston and the inner surface of the chamber, which makes possible the movement of the piston inside the chamber in the direction of the longitudinal axis of the chamber. The piston is manufactured from polyacetate. The piston is uniformly substantially evenly thick and both of its surfaces are substantially even. The thickness of the piston can be 1-5 mm. The surface area A₁ of the piston is substantially larger than the surface area A₂ of the connection opening. On the inner surface of the side wall there is a bypass groove 23 in the direction of the longitudinal axis of the chamber, the first end of which groove opens up into the groove 20 circulating the edge of the bottom 14 and the second end close to the plate-like part of the lid.

The piston 34 moves freely inside the chamber 32 under the influence of the gas pressure influencing it in the direction of the longitudinal axis of the chamber. Figure 1a shows a quick release valve according to the invention in a situation where gas is supplied, where the piston is in the first position set against the first surface 14a of the bottom 14. In the supply situation pressurised gas is led into the chamber of the quick release valve from a source 200 of pressurised gas through the inlet opening 30. The pressurised gas can for example be pressurised air or steam and the source 200 of pressurised gas can for example be a compressor or a steam generator. Overpressure is thus generated into the chamber in the space delimited by the lid 12, the side wall 26 and the piston, which overpressure pushes the piston tightly against the bottom 14. The piston set against the bottom closes the mouths of the connection opening 16 and the outlet openings 24. Pressurised gas can however flow through the bypass groove 23 past the edge of the piston into the groove 20 and further along the bypass duct 22 into the connection opening, finally ending up in the space 100 to be pressurised. Pressurised gas thus flows from the gas source into the space to be pressurised as long as the supply of pressurised gas is active. When the supply of gas continues long enough, the gas pressure prevailing in the pressure vessel is finally as large as the gas pressure prevailing in the chamber 32. Because the surface area A₁ of the piston is larger than the surface area A₂ of the connection opening, the force pushing the piston against the bottom is larger than the force pushing the piston upwards from the bottom. The piston thus remains in its place in the first position shown in Figure 1a, which position closes the ends of the outlet openings, as long as the gas pressure in the chamber is larger than the gas pressure in the space to be pressurised.

Figure 2a shows the quick release valve shown in Figures 1a and 1b as a vertical cross-sectional view, when the quick release valve is triggered, i.e. when the gas in the space 100 to be pressurised is suddenly allowed to flow out of the space through the quick release valve. Figure 2b shows the quick release valve of Figure 2a as a horizontal cross-sectional view cut along sectional plane B-B. The quick release valve is triggered by cutting off the supply of pressurised gas from the source of pressurised gas to the quick release valve, i.e. by closing a closing valve 80 on the gas supply route. When the closing valve closes the pressurised gas can flow through the closing valve out of the chamber, whereby the gas pressure in the chamber drops quickly. The gas pressure in the space 100 to be pressurised is thus higher than the gas pressure in the chamber 32, so the force directed onto the piston from the connection opening 16 is substantially larger than the force directed onto the piston from the chamber. The pressure directed onto the piston through the connection opening raises the piston from the bottom and pushes it into the second position shown in Figure 2a, where it is pressed against the lid. When the piston is in this position it no longer closes the mouths of the outlet openings 24, whereby the pressurised gas can flow freely from the space to be pressurised through the connection opening into the chamber and through the outlet openings further out of the chamber. The gas is thus quickly discharged from the pressurised space immediately after the quick release valve is triggered. It is clear that the gas starts to flow from the space to be pressurised into the chamber also along the bypass duct 22 immediately when the gas pressure in the chamber drops. Because of the small cross-section of the bypass duct the gas flow occurring along this path is in practice however so small, that it has no effect on the operation of the piston in the triggering situation.

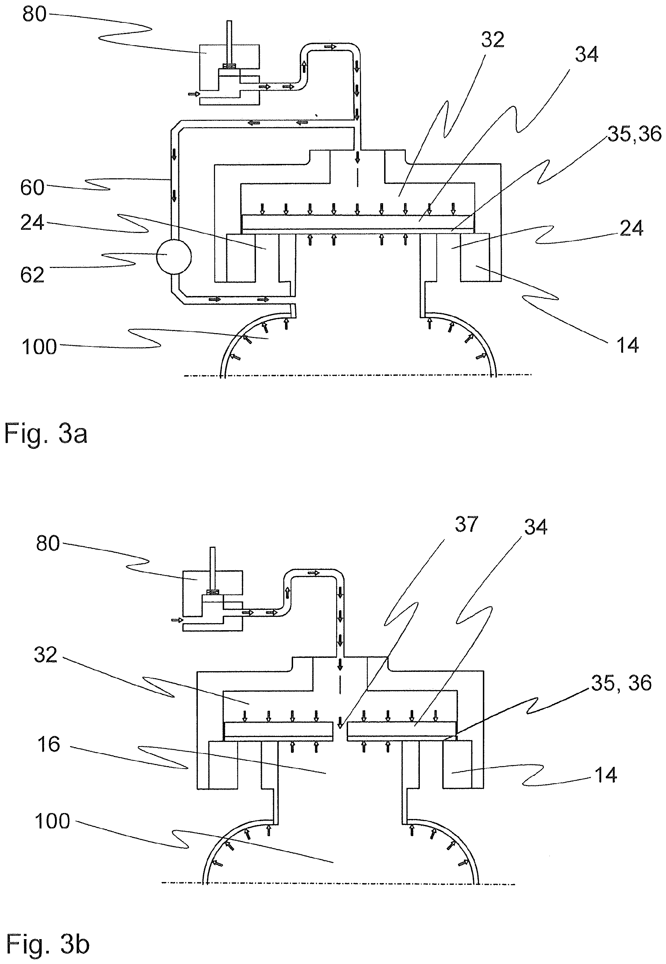

Figure 3a shows as an example an advantageous embodiment of the quick release valve according to the invention as a cross-sectional view. The advantageous embodiment of the invention shown in the figure has the same parts as the above-described figures. The same names and reference numbers as above have been used for these parts in the description. The embodiment shown in Figure 3a does not have a bypass duct and there is no bypass groove in the bottom, but the gas is led into the space 100 to be pressurised along a bypass pipe 60 on the outside of the quick release valve. The bypass pipe has a check valve 62, which allows gas to flow in the direction of the space 100 to be pressurised, but prevents the gas from flowing in the opposite direction. In this embodiment the triggering of the quick release valve occurs in the same way as above, i.e. by cutting off the supply of pressurised gas into the chamber 32 and the space to be pressurised with the aid of the closing valve 80, whereby the gas pressure in the chamber drops and the piston 34 moves into the second position.

In the embodiment shown in Figure 3a the closing surface 36 of the piston settling against the bottom 14 has a flexible coating 35. The material of the coating can be any flexible material suitable for the purpose, such as rubber or silicone. The coating functions as a sealing member, which ensures that the pressurised gas cannot flow between the piston and the first surface of the lid into the outlet openings 24. The coating further also functions as an attenuation member protecting the piston in the beginning when pressurising the quick release valve, when the piston strikes against the first surface of the lid with high speed.

Figure 3b shows as an example a second advantageous embodiment of the quick release valve according to the invention as a cross-sectional view. The advantageous embodiment of the invention shown in the figure has the same parts as the above-described figures. The same names and reference numbers as above have been used for these parts in the description. The embodiment shown in Figure 3b does not have a bypass duct and there is no bypass groove in the bottom. Instead, there is a penetrating supply hole 37 in the middle of the piston, through which the gas can in a pressurising situation flow from the chamber 32 into the space 100 to be pressurised. The cross-sectional area of the supply hole is substantially smaller than the surface area of the piston or the connection opening 16. The closing surface 36 of the piston may have a flexible coating 35.

Also in this embodiment the triggering of the quick release valve occurs in the same way as above, i.e. by cutting off the supply of pressurised gas into the chamber 32 and the space 100 to be pressurised, whereby the gas pressure in the chamber drops and the piston 34 moves into the second position.

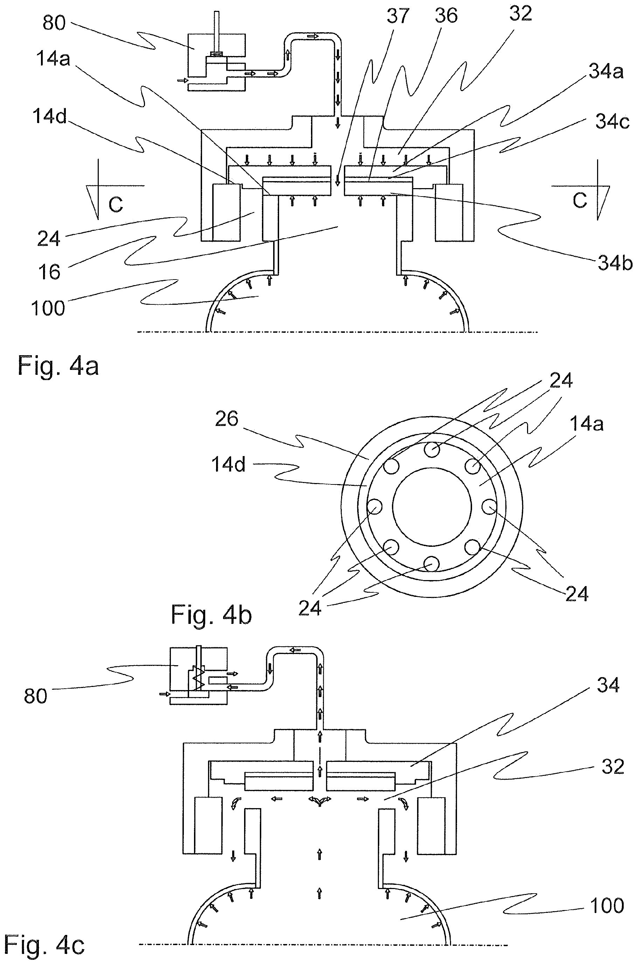

Figure 4a-4c shows as an example a third advantageous embodiment of the quick release valve according to the invention as cross-sectional views. Figures 4a and 4c show an embodiment of the quick release valve as vertical cross-sectional views and Figure 4b as a horizontal cross-sectional view cut along sectional plane C-C. In Figure 4a the quick release valve is in a pressurising situation and in Figure 4c in a triggering situation. The advantageous embodiment of the invention shown in the figures has the same parts as the above-described figures. The same names and reference numbers as above have been used for these parts in the description.

In this embodiment there is a peripheral surface 14d on the edges of the first surface 14a of the bottom 14, which peripheral surface is on a different level than the other area of the first surface. The first surface thus has two substantially parallel parts on different levels, the circular middle part of the first surface and the ring-like peripheral surface 14d surrounding it. The mouths of the outlet openings 24 and the connecting opening 16 penetrating the bottom open up into the middle part. The piston 34 has two plate-like parts, an upper plate 34a and a lower plate 34b, between which there is a flexible attenuation layer 34c. The attenuation layer can be of any flexible material suitable for the purpose, such as rubber or silicone. The upper plate and lower plate are attached together via the attenuation layer. The upper plate is to its shape a circular part, the diameter of which is slightly smaller than the internal diameter of the cylindrical chamber 32. The lower plate also has a circular shape, but its diameter is significantly smaller than the diameter of the upper plate. The diameter of the lower plate is dimensioned so that the lower plate covers the mouth of the connection opening 16 but does not extend over the mouths of the outlet openings. When supplying pressurised gas the piston 34 settles against the first surface 14a, so that the lower plate 34a covers the mouth of the connection opening and the edge part of the upper plate covers the mouths of the outlet openings. The closing surface 36 of the piston is thus formed by the lower plate and the part of the upper plate, which extends outside the edge of the lower plate. The gas moves from the chamber 32 into the space 100 to be pressurised through a supply hole 37 passing through the upper plate, the attenuation layer and the lower plate.

Also in this embodiment the triggering of the quick release valve occurs in the same way as above, i.e. by closing the closing valve 80, whereby the supply of pressurised gas into the chamber 32 and the space 100 to be pressurised stops, the gas pressure in the chamber drops and the piston 34 moves into the second position.

The quick release valve according to the invention is suitable for use in various pneumatic devices, where the gas in the pressurised space must be discharged very quickly. Such devices are for example so-called air cannons, which are used to generate air pressure pulses to be directed towards structures. One important application for a quick release valve are striking tools, which have a mass piston moving inside a pressure cylinder and a spring setting the mass piston in a striking motion. The striking tool is tuned into striking readiness by leading pressurised air into the pressure cylinder, whereby the mass piston moves toward the second end of the pressure cylinder. Simultaneously the spring between the end of the striking cylinder and the piston is compressed. When the pressure is quickly removed from the striking cylinder, the force stored in the spring sets the mass piston in a striking motion. In a striking tool equipped with a quick release valve according to the invention the discharging of the pressure cylinder occurs so quickly that the air pressure in the cylinder does not slow down the movement of the mass piston at all.

Some advantageous embodiments of the quick release valve according to the invention have been described above. The invention is not limited to the solutions described above, it can be applied in numerous ways within the scope of the claims.

## Claims

1. A quick release valve, which has a chamber (32), an inlet opening (30) leading into the chamber, a connection opening (16) for connecting to a space (100) to be pressurised, at least one outlet opening (24) and a piston (34), which is moveable under the influence of air pressure between a first position closing the outlet opening and a second position opening the outlet opening, which chamber has a first surface (14a) and the mouths of the connection opening and the outlet openings open up onto said first surface, and the piston has a closing surface (36), which in said first position is arranged to settle against said first surface and to cover the mouths of the connection opening and outlet openings, and the quick release valve has a bypass route (22, 23, 37) for leading pressurised gas into the connection opening (16) past the piston (34) in the first position, **characterised in that**, the piston (34) is a part placed in the chamber (32), which part moves freely under the influence of air pressure.

2. The quick release valve according to claim 1, **characterised in that** said first surface (14a) and said closing surface (36) are substantially even.

3. The quick release valve according to claim 1, **characterised in that** there is a peripheral surface (14d) on the edges of said first surface (14a), which peripheral surface is on a different level than the middle part of the first surface.

4. The quick release valve according to any of the claims 1-3, **characterised in that** the piston (34) is substantially a rigid plate-like part.

5. The quick release valve according to any of the claims 1-4, **characterised in that** the material of the piston (34) is polyacetate.

6. The quick release valve according to any of the claims 1-5, **characterised in that** the closing surface (36) of the piston (34) has a flexible coating (35).

7. The quick release valve according to any of the claims 1-6, **characterised in that** the piston (34) is a layered structure, which has an upper plate (34a), a lower plate (34b) and an attenuation layer (34c) between the upper plate and lower plate.

8. The quick release valve according to any of the claims 1-7, **characterised in that** it has a lid (12), which has a cylindrical side wall (26), and a bottom (14), which is attached to the edge of the side wall, so that the lid and the bottom form a chamber (32).

9. The quick release valve according to claim 8, **characterised in that** the lid (12) and the bottom (14) are of metal, advantageously aluminium.

10. The quick release valve according to any of the claims 1-9, **characterised in that** said bypass route comprises a bypass groove (23) in the side wall (26) of the lid (12), a groove (20) in the edge of the bottom and at least one bypass duct (22) leading from the groove to the connection opening (16).

11. The quick release valve according to any of the claims 1-9, **characterised in that** said bypass route comprises a supply hole (37) leading through the piston (34).

12. The quick release valve according to any of the claims 1-11, **characterised in that** the surface area A₁ of the piston (34) is substantially larger than the cross-sectional area A₂ of the connection opening (16).

13. The quick release valve according to any of the claims 1-12, **characterised in that** it is the quick release valve of a pneumatic striking tool.

## Patentansprüche

1. Schnellöffnungsventil, das eine Kammer (32), eine in die Kammer führende Einlassöffnung (30), eine Anschlussöffnung (16) zum Anschluss an einen mit Druck zu beaufschlagenden Raum (100), mindestens eine Auslassöffnung (24) und einen Kolben (34), der unter der Einwirkung von Luftdruck zwischen einer ersten Position, die die Auslassöffnung verschließt, und einer zweiten Position, die die Auslassöffnung öffnet, beweglich ist, aufweist, wobei die Kammer eine erste Fläche (14a) aufweist und sich die Mündungen der Anschlussöffnung und der Auslass-öffnungen zur ersten Fläche öffnen, und wobei der Kolben eine Schließfläche (36) aufweist, die in der ersten Position dazu angeordnet ist, an der ersten Fläche aufzuliegen und die Mündungen der Anschlussöffnung und Auslassöffnungen abzudecken, und wobei das Schnellöffnungsventil eine Bypass-Route (22, 23, 37) aufweist, um druckbeaufschlagtes Gas am Kolben (34) in der ersten Position vorbei in die Anschlussöffnung (16) zu leiten, **dadurch gekennzeichnet, dass** der Kolben (34) ein Teil ist, das in der Kammer (32) platziert ist, wobei sich das Teil unter der Einwirkung von Luftdruck frei bewegt.

2. Schnellöffnungsventil nach Anspruch 1, **dadurch gekennzeichnet, dass** die erste Fläche (14a) und die Schließfläche (36) im Wesentlichen eben sind.

3. Schnellöffnungsventil nach Anspruch 1, **dadurch gekennzeichnet, dass** sich eine Randfläche (14d) auf den Kanten der ersten Fläche (14a) befindet, wobei sich die Randfläche auf einer anderen Ebene befindet als der Mittelteil der ersten Fläche.

4. Schnellöffnungsventil nach einem der Ansprüche 1-3, **dadurch gekennzeichnet, dass** der Kolben (34) im Wesentlichen ein steifes, plattenartiges Teil ist.

5. Schnellöffnungsventil nach einem der Ansprüche 1-4, **dadurch gekennzeichnet, dass** das Material des Kolbens (34) Polyacetat ist.

6. Schnellöffnungsventil nach einem der Ansprüche 1-5, **dadurch gekennzeichnet, dass** die Schließfläche (36) des Kolbens (34) eine flexible Beschichtung (35) aufweist.

7. Schnellöffnungsventil nach einem der Ansprüche 1-6, **dadurch gekennzeichnet, dass** der Kolben (34) eine mehrschichtige Struktur aufweist, die eine obere Platte (34a), eine untere Platte (34b) und eine Dämpfungsschicht (34c) zwischen der oberen Platte und der unteren Platte aufweist.

8. Schnellöffnungsventil nach einem der Ansprüche 1-7, **dadurch gekennzeichnet, dass** sie einen Deckel (12) aufweist, der eine zylindrische Seitenwand (26) und einen Boden (14), der an der Kante der Seitenwand befestigt ist, sodass der Deckel und der Boden eine Kammer (32) ausbilden, aufweist.

9. Schnellöffnungsventil nach Anspruch 8, **dadurch gekennzeichnet, dass** der Deckel (12) und der Boden (14) aus Metall, vorzugsweise Aluminium gefertigt sind.

10. Schnellöffnungsventil nach einem der Ansprüche 1-9, **dadurch gekennzeichnet, dass** die Bypass-Route eine Bypass-Nut (23) in der Seitenwand (26) des Deckels (12), eine Nut (20) in der Kante des Bodens und mindestens einen Bypass-Kanal (22), der von der Nut zur Anschlussöffnung (16) führt, umfasst.

11. Schnellöffnungsventil nach einem der Ansprüche 1-9, **dadurch gekennzeichnet, dass** die Bypass-Route eine Zufuhröffnung (37) umfasst, die durch den Kolben (34) führt.

12. Schnellöffnungsventil nach einem der Ansprüche 1-11, **dadurch gekennzeichnet, dass** die Oberfläche A₁ des Kolbens (34) wesentlich größer als die Querschnittsfläche A₂ der Anschlussöffnung (16) ist.

13. Schnellöffnungsventil nach einem der Ansprüche 1-12, **dadurch gekennzeichnet, dass** es das Schnellöffnungsventil eines pneumatischen Schlagwerkzeugs ist.

## Revendications

1. Soupape à ouverture rapide, qui comporte une chambre (32), une ouverture d'entrée (30) menant dans la chambre, une ouverture de raccord (16) permettant le raccord avec un espace (100) qui doit être mis sous pression, au moins une ouverture de sortie (24) et un piston (34), qui est mobile sous l'influence de la pression d'air entre une première position fermant l'ouverture de sortie et une seconde position ouvrant l'ouverture de sortie, cette chambre est dotée d'une première surface (14a) et les bouches de l'ouverture de raccord et des ouvertures de sortie s'ouvrent sur ladite première surface, et le piston présente une surface de fermeture (36) qui, dans ladite première position, est conçue de manière à reposer contre ladite première surface et à recouvrir les bouches de l'ouverture de raccord et des ouvertures de sortie, et la soupape à ouverture rapide présente une voie de dérivation (22, 23, 37) permettant d'amener le gaz sous pression dans l'ouverture de raccord (16) en passant par le piston (34) dans la première position, **caractérisée en ce que** le piston (34) est une partie placée dans la chambre (32), laquelle partie bouge librement sous l'influence de la pression atmosphérique.

2. Soupape à ouverture rapide selon la revendication 1, **caractérisée en ce que** ladite première surface (14a) et ladite surface de fermeture (36) sont sensiblement planes.

3. Soupape à ouverture rapide selon la revendication 1, **caractérisée en ce qu'**il y a une surface périphérique (14d) sur les bords de ladite première surface (14a), laquelle surface périphérique est à un niveau différent de la partie centrale de la première surface.

4. Soupape à ouverture rapide selon l'une quelconque des revendications 1 à 3, **caractérisée en ce que** le piston (34) est sensiblement une pièce rigide de type plaque.

5. Soupape à ouverture rapide selon l'une quelconque des revendications 1 à 4, **caractérisée en ce que** le matériau du piston (34) est le polyacétate.

6. Soupape à ouverture rapide selon l'une quelconque des revendications 1 à 5, **caractérisée en ce que** la surface de fermeture (36) du piston (34) présente un revêtement flexible (35).

7. Soupape à ouverture rapide selon l'une quelconque des revendications 1 à 6, **caractérisée en ce que** le piston (34) est une structure en couches, qui présente une plaque supérieure (34a), une plaque inférieure (34b) et une couche d'atténuation (34c) entre la plaque supérieure et la plaque inférieure.

8. Soupape à ouverture rapide selon l'une quelconque des revendications 1 à 7, **caractérisée en ce qu'**elle présente un couvercle (12) qui présente une paroi latérale cylindrique (26) et un fond (14) qui est fixé au bord de la paroi latérale, de sorte que le couvercle et le fond forment une chambre (32).

9. Soupape à ouverture rapide selon la revendication 8, **caractérisée en ce que** le couvercle (12) et le fond (14) sont en métal, avantageusement en aluminium.

10. Soupape à ouverture rapide selon l'une quelconque des revendications 1 à 9, **caractérisée en ce que** ladite voie de dérivation comprend une rainure de dérivation (23) dans la paroi latérale (26) du couvercle (12), une rainure (20) dans le bord du fond et au moins un conduit de dérivation (22) menant de la rainure à l'ouverture de raccord (16).

11. Soupape à ouverture rapide selon l'une quelconque des revendications 1 à 9, **caractérisée en ce que** ladite voie de dérivation comprend un trou d'alimentation (37) menant à travers le piston (34).

12. Soupape à ouverture rapide selon l'une quelconque des revendications 1 à 11, **caractérisée en ce que** la surface A₁ du piston (34) est sensiblement plus grande que la surface A₂ de la section transversale de l'ouverture de raccord (16).

13. Soupape à ouverture rapide selon l'une quelconque des revendications 1 à 12, **caractérisée en ce qu'**elle est la soupape à ouverture rapide d'un outil de frappe pneumatique.
